(19) Europäisches Patentamt
European Patent Office
Office européen des brevets

(11) **EP 3 629 570 A2**

(12) **EUROPEAN PATENT APPLICATION**

(43) Date of publication:
**01.04.2020 Bulletin 2020/14**

(51) Int Cl.:
**H04N 5/232** (2006.01)   **H04N 19/115** (2014.01)
**H04N 19/136** (2014.01)   **H04N 19/172** (2014.01)

(21) Application number: **19188889.0**

(22) Date of filing: **29.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2018 JP 2018179425**

(71) Applicant: **Ricoh Company, Ltd.**
**Tokyo 143-8555 (JP)**

(72) Inventor: **KAJIWARA, Yasuhiro**
**Tokyo, 143-8555 (JP)**

(74) Representative: **J A Kemp LLP**
**14 South Square**
**Gray's Inn**
**London WC1R 5JJ (GB)**

(54) **IMAGE CAPTURING APPARATUS AND IMAGE RECORDING METHOD**

(57)     An image capturing apparatus includes an image capturing unit (21, 22, 116, 210) and a recording control unit (260). The image capturing unit is configured to capture images. The recording control unit is configured to compare a first image with a second image among the captured images, the second image being an image captured after the first image has been captured, and to control recording of the second image in accordance with an amount of change from the first image.

FIG. 3

EP 3 629 570 A2

**Description**

BACKGROUND

Technical Field

Embodiments of the present disclosure relate to an image capturing apparatus and an image recording method.

Description of the Related Art

Currently, a spherical camera, which is one type of image capturing apparatus, is used to share scenes at the site. A spherical camera can capture an image of a 360-degree panoramic scene as a spherical image. One example application of images captured with a spherical camera is a virtual preview. In a virtual preview, the viewpoint is moved to an image capture point arranged on a floor plan and the viewpoint is changed 360 degrees at the point in a three-dimensional (3D) tour to view the scene at each point that is reconfigured in the virtual space. A person captures images of scenes around image capture points with a spherical camera, and each point is reconfigured in a virtual space in three dimensions on the basis of the images recorded at the time of image capturing so that the scene around the point is viewed.

As a technique for a digital video camera or a digital still camera, a document discloses a signal processing apparatus that determines fundamental scenes in a moving image by estimation and creates a summary image including the fundamental scenes (see JP-2011-205599-A).

However, in a case of automatically estimating the relative position and angle in image capture point switching on the basis of captured images by using a technique, such as the Structure from Motion (SfM) or the Visual Simultaneous Localization and Mapping (SLAM), a special image capturing method is to be used. In this technique, local regions called feature points that can be easily distinguished from the other regions are extracted from a group of images captured at a plurality of points, and the feature points in one image are associated with those in another image to estimate the 3D positions of the feature points and estimate the image capture point. In a case of using the above-listed techniques, a person who captures images is required to have prior knowledge of the techniques and to capture images while taking into account their technical limitations, which is a disadvantage.

SUMMARY

Embodiments of the present disclosure are made in view of the above, and an object thereof is to provide an image capturing apparatus and an image recording method with which a person who does not have prior technical knowledge can sufficiently capture a group of images.

An image capturing apparatus according to an embodiment of the present disclosure includes an image capturing unit and a recording control unit. The image capturing unit is configured to capture images. The recording control unit is configured to compare a first image with a second image among the captured images, the second image being an image captured after the first image has been captured, and to control recording of the second image in accordance with an amount of change from the first image.

According to an embodiment of the present disclosure, a person who does not have prior technical knowledge can sufficiently capture a group of images.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a diagram schematically illustrating a configuration of a spherical image capturing apparatus, which is an example of an image capturing apparatus according to an embodiment;
FIG. 2 is a diagram illustrating an example hardware configuration of the spherical image capturing apparatus in FIG. 1;
FIG. 3 is a diagram illustrating an example configuration of an image processing unit that records and processes spherical frame images captured by the spherical image capturing apparatus;
FIG. 4 is a flowchart illustrating an example process flow at the time of image capturing by the spherical image capturing apparatus;
FIG. 5 is a flowchart illustrating an example process flow of a feature point scoring process;

FIG. 6 is a flowchart illustrating an example calculation process for calculating the amount of blur performed by a blur amount calculation processing unit;

FIGs. 7A and 7B are graphs illustrating an example of a difference in recording density of an input frame image in a case where a condition for recording the input frame image differs; and

FIG. 8 is a diagram illustrating an example configuration of a feature point scoring processing unit according to a first modification.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, embodiments of an image capturing apparatus and an image recording method will be described in detail with reference to the attached drawings.

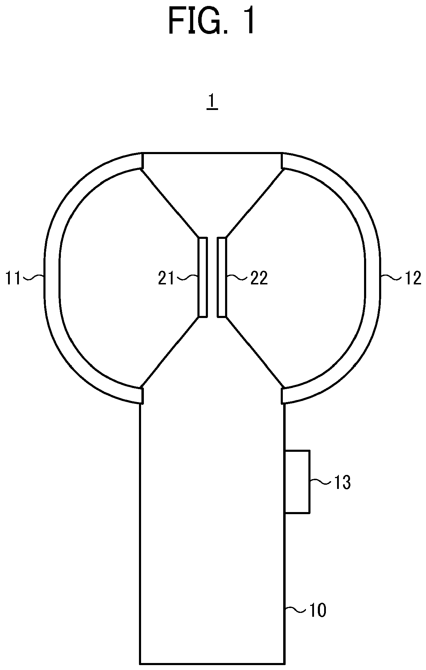

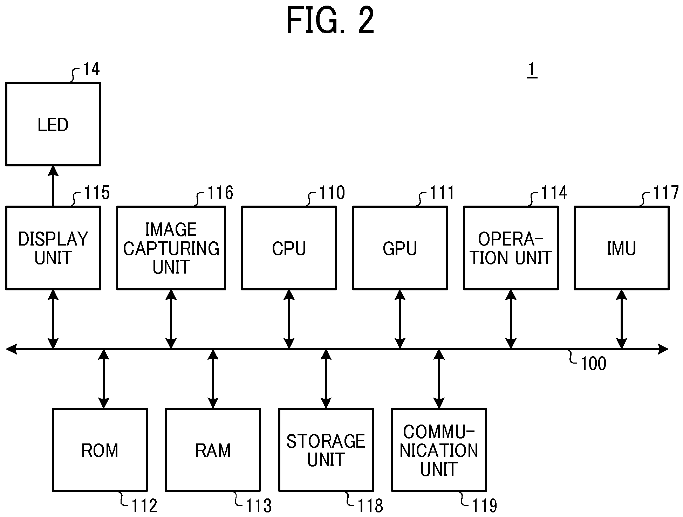

FIG. 1 is a diagram schematically illustrating a configuration of a spherical image capturing apparatus, which is an example of an image capturing apparatus according to an embodiment. A spherical image capturing apparatus 1 illustrated in FIG. 1 includes two fisheye lenses 11 and 12 having a wide angle of view of, for example, 180 degrees or more and two imaging elements 21 and 22 provided at respective positions at which hemispherical images input from the fisheye lenses 11 and 12 are formed. The two imaging elements 21 and 22 are, for example, complementary metal-oxide semiconductor (CMOS) image sensors. The spherical image capturing apparatus 1 has a housing 10, which includes an image capture switch 13. The housing 10 further includes a light emitting diode (LED) 14 (see FIG. 2) that functions as a light emitting indicator indicating a status, that is, a standby state, a state where image capturing is ongoing, or a state where image recording is ongoing.

FIG. 2 is a diagram illustrating an example hardware configuration of the spherical image capturing apparatus 1. As illustrated in FIG. 2, the spherical image capturing apparatus 1 includes a central processing unit (CPU) 110, a graphics processing unit (GPU) 111, a read-only memory (ROM) 112, a random access memory (RAM) 113, an operation unit 114, a display unit 115, an image capturing unit 116, an inertial measurement unit (IMU) 117, a storage unit 118, and a communication unit 119, which are connected to one another via a bus 100.

The CPU 110 and the GPU 111 are processors that control the spherical image capturing apparatus 1 as a whole and perform various processes.

The ROM 112 is a nonvolatile memory that stores programs for controlling the spherical image capturing apparatus 1 and for various processes. The RAM 113 is a volatile memory that is used as a work area.

The operation unit 114 is an input interface for accepting operations for image capture start, image capture stop, etc. input via the image capture switch 13.

The display unit 115 is a display interface for displaying the status of the spherical image capturing apparatus 1 (the spherical image capturing apparatus 1 is in a standby state, image capturing is ongoing, image recording is ongoing, etc.) by turning on and off the LED 14.

The image capturing unit 116 is an image processing circuit, which is, for example, an application-specific integrated circuit (ASIC). The image capturing unit 116 obtains two pieces of hemispherical image data from the two imaging elements 21 and 22 in response to an image capture start instruction, performs a predetermined process (for example, a black level correction, a color correction, a defective pixel correction, etc.) for each of the obtained two pieces of hemispherical image data, and combines the two pieces of hemispherical image data to generate spherical image data. The two pieces of hemispherical image data have an overlap region. On the basis of this overlap region, the two pieces of hemispherical image data are combined to generate the spherical image data. The image capturing unit 116 puts the generated spherical image data into the RAM 113. The image capturing unit 116 obtains the image capture time and records image capture time information in the RAM 113 in addition to the spherical image data. In this example, for the spherical image data, which is an example of "captured image", a process for recording is performed in a subsequent stage.

The IMU 117 is a sensor unit that outputs various types of information (angular speed, etc.) concerning the angle, motion, etc. of the main body of the spherical image capturing apparatus 1.

To the storage unit 118, an external memory (which corresponds to "recording means" and is, for example, a flash memory) is connected, and the storage unit 118 saves recording data in the external memory. The communication unit 119 is a communication interface for communicating with an external device. The communication unit 119 receives a signal for setting an image capture parameter or a signal for an image capture instruction from the external device. In a case of receiving a signal for setting an image capture parameter, the communication unit 119 stores the image capture parameter in the storage unit 118. In a case of receiving a signal for an image capture instruction, the communication unit 119 transmits recording data to the external device in accordance with a setting. The parameter setting and the image capture instruction are implemented by using a Web page distributed from a Web server in the main body. This example presents a configuration in which the recording data can be output to either the external memory or the external device; however, a configuration may be employed in which the recording data is output to only the external memory or the external device.

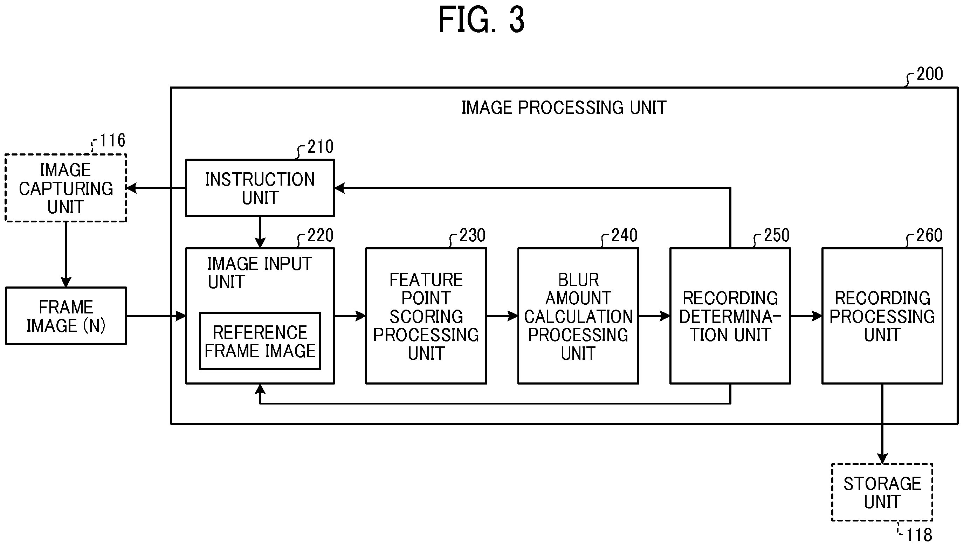

FIG. 3 is a diagram illustrating an example configuration of an image processing unit that performs a recording process for spherical frame images captured by the spherical image capturing apparatus 1. The units included in the image processing unit in FIG. 3 are implemented by the CPU 110 executing a predetermined program stored in the ROM 112. Some or all of the units may be configured as dedicated hardware, such as an ASIC.

As illustrated in FIG. 3, an image processing unit 200 includes an instruction unit 210, an image input unit 220, a feature point scoring processing unit 230, a blur amount calculation processing unit 240, a recording determination unit 250, and a recording processing unit 260. The instruction unit 210 corresponds to part of "image capturing means". The image input unit 220 corresponds to "setting means". The feature point scoring processing unit 230 corresponds to "obtaining means". The blur amount calculation processing unit 240 corresponds to "blur amount calculation means". The recording determination unit 250 corresponds to "determination means". The recording processing unit 260 corresponds to "recording control means".

The instruction unit 210 gives an instruction for starting and stopping an image capture process in response to an input operation accepted by the operation unit 114. For example, during a period from when an image capture start instruction is accepted to when an image capture stop instruction is accepted, the instruction unit 210 instructs the image capturing unit 116 to capture an image at predetermined timings. In this example, the instruction unit 210, the image capturing unit 116, and the two imaging elements 21 and 22 correspond to "image capturing means".

The image input unit 220 inputs, to the feature point scoring processing unit 230, a preview image (processing target frame image) put into the RAM 113 by the image capturing unit 116 and a reference frame image set in the RAM 113 by the image input unit 220. The reference frame image corresponds to "first image", and the preview image corresponds to "second image" captured after the first image has been captured.

The feature point scoring processing unit 230 compares the processing target frame image with the reference frame image input from the image input unit 220 and obtains the amount of change in feature points that change in the processing target frame image from the reference frame image. As the amount of change, in this example, the feature point scoring processing unit 230 calculates the decrease ratio of the number of feature points, the decrease ratio indicating to what extent feature points present in the reference frame image decrease in the processing target frame image. Hereinafter, the decrease ratio is represented by a survival ratio indicating to what extent feature points present in the reference frame image survive in the processing target frame image. In this example, as the amount of change, the feature point scoring processing unit 230 further calculates the change ratio (emergence ratio) of the number of feature points that newly appear (emerge) in the processing target frame image.

The blur amount calculation processing unit 240 calculates the amount of blur in the processing target frame image.

The recording determination unit 250 determines whether to record the processing target frame image on the basis of the results obtained by the feature point scoring processing unit 230. Further, in this example, the recording determination unit 250 determines whether to record the processing target frame image also on the basis of the result obtained by the blur amount calculation processing unit 240. For example, in a case where a value indicating the emergence ratio is equal to or larger than a predetermined value or in a case where a value indicating the survival ratio is equal to or smaller than a predetermined value, the recording determination unit 250 determines that the frame image is to be recorded as an image for which the record of feature points is to be updated. In a case where a blur amount is large, it is not possible to accurately calculate the emergence ratio or the survival ratio, and therefore, the recording determination unit 250 determines that the frame image is not to be recorded. In a case where the recording determination unit 250 determines that the processing target frame image is to be recorded, the recording determination unit 250 sends a notification to the image input unit 220, and the image input unit 220 updates the reference frame image with the processing target frame image.

In a case where the recording determination unit 250 determines that the processing target frame image is to be recorded, the recording processing unit 260 performs control for recording the processing target frame image. For example, in a case where the flash memory of the storage unit 118 is specified as the recording destination, the recording processing unit 260 controls the storage unit 118 to save the processing target frame image in the flash memory. In a case where the external device is specified as the recording destination, the recording processing unit 260 controls the communication unit 119 to transmit the processing target frame image to the external device.

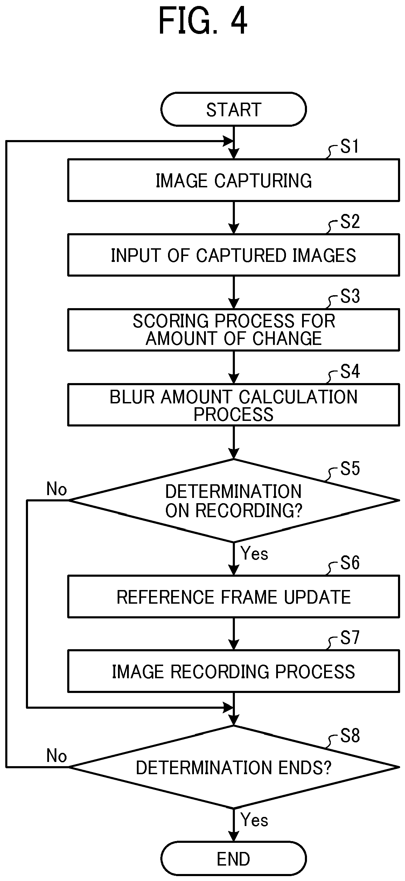

FIG. 4 is a flowchart illustrating an example process flow (image recording method) at the time of image capturing by the spherical image capturing apparatus 1. When an image capturing person performs an operation of, for example, turning on the image capture switch 13 of the main body of the spherical image capturing apparatus 1 to give an image capture start instruction, the CPU 110 executes an image capture program stored in the ROM 112 and starts a process as described below. The image capturing person may operate a graphical user interface (GUI) of a Web page distributed from the Web server in the main body to start the image capture program.

First, when the instruction unit 210 instructs the image capturing unit 116 to capture images, image capturing for one frame is performed with the two imaging elements 21 and 22, and a frame image for one frame obtained by combining the two images is put into the RAM 113 from the image capturing unit 116 (step S1).

Next, the image input unit 220 inputs, to the feature point scoring processing unit 230, the frame image (processing target frame image) put into the RAM 113 and a reference frame image set in the RAM 113 by the image input unit 220 (step S2). Immediately after the start of image capturing, no reference frame image is set, and therefore, the image input unit 220 inputs only the processing target frame image to the feature point scoring processing unit 230.

Next, the feature point scoring processing unit 230 calculates the emergence ratio and the survival ratio of feature points for the processing target frame image input from the image input unit 220 (step S3). Until the reference frame image is set immediately after the start of image capturing, this process is skipped.

Next, the blur amount calculation processing unit 240 calculates the amount of blur in the processing target frame image (step S4).

Next, on the basis of the results of calculating the emergence ratio and the survival ratio of feature points and the result of calculating the amount of blur, the recording determination unit 250 determines whether to record the processing target frame image (step S5). For example, in a case where the emergence ratio is equal to or larger than a predetermined value or the survival ratio is equal to or smaller than a predetermined value, the recording determination unit 250 determines that the frame image is to be recorded. In a case where the amount of blur is equal to or larger than a threshold, the recording determination unit 250 determines that the frame image is not to be recorded. Until the reference frame image is set immediately after the start of image capturing, the recording determination unit 250 determines whether to record the processing target frame image on the basis of only the result of calculating the amount of blur.

Further, the recording determination unit 250 compares the image capture time of the processing target frame image with the image capture time of the reference frame image, and in a case where the image capture interval is shorter than a set shortest image capture interval, determines that the processing target frame image is not to be recorded. As the predetermined value of the survival ratio and that of the emergence ratio and the set value of the shortest image capture interval, values stored in the storage unit 118 are used.

In a case where the recording determination unit 250 determines that the processing target frame image is to be recorded (Yes in step S5), the recording determination unit 250 instructs the image input unit 220 to replace the reference frame image with the processing target frame image (step S6). Thereafter, the recording determination unit 250 instructs the recording processing unit 260 to save the processing target frame image in the flash memory of the storage unit 118 (step S7). In step S6, immediately after the start of image capturing, no reference frame image is set, and therefore, the image input unit 220 sets the processing target frame image as the reference frame image.

In a case where the recording determination unit 250 determines that the processing target frame image is not to be recorded (No in step S5), the process in step S6 and step S7 is skipped.

In a case where the instruction unit 210 has not yet accepted an operation for stopping image capturing (No in step S8), the flow returns to step S1, and the image capture process is performed for the next frame with a similar procedure. On the other hand, in a case where the instruction unit 210 has accepted an operation for stopping image capturing (Yes in step S8), the image capture process ends. In addition, in a case where, for example, the flash memory runs out of space, the image capture process ends.

As described above, among the captured frame images, the spherical image capturing apparatus 1 saves, in the flash memory or the like, only frame images in which the emergence ratio or survival ratio of feature points, the amount of blur, etc. satisfy predetermined conditions.

Now, a specific example of a calculation process for calculating the emergence ratio and the survival ratio of feature points performed by the feature point scoring processing unit 230 is described.

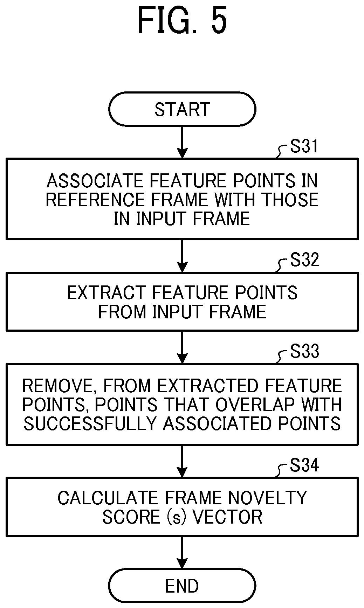

FIG. 5 is a flowchart illustrating an example process flow performed by the feature point scoring processing unit 230. The feature point scoring processing unit 230 first performs a process for associating feature points in the reference frame image with those in an input frame image (processing target frame image) (step S31). Association of these feature points is performed by using either a method of association using the feature values of feature points in the reference frame image and those in the input frame image or a method of searching the input frame image for feature points present in the reference frame image with an optical flow.

For example, association can be performed by applying an object detection process disclosed by, for example, JP-2015-207281-A. Specifically, a process for images (a reference image and a comparison image) output from two image capturing units of a stereo camera described in the patent document is performed for the reference frame image and the input frame image in this example.

For example, the reference frame image and the input frame image are each converted to a piece of luminance image data. For each piece of luminance image data, in a certain line of the reference frame image, a block formed of a plurality of pixels (for example, 16 pixels × 1 pixel) including one pixel of interest at the center is defined. On the other hand, along the same line in the input frame image, a block having a size the same as that of the defined block of the reference frame image is successively shifted in a lateral line direction (X direction) by one pixel, and a correlation value indicating a correlation between a feature value indicating the feature of the values of pixels in the block defined in the reference frame image and a feature value indicating the feature of the values of pixels in each block in the input frame image is calculated. On the basis of the calculated correlation values, a matching process is performed in which a block in the input frame image having the closest correlation with the block in the reference frame image is selected from among the blocks in the input frame image. As the feature value of a block used in the matching process, for example, the value (luminance value) of each pixel within the block can be used. As the correlation value, for example, the sum of the absolute values of the differences between the values (luminance values) of the pixels within the block of the reference frame image and the values (luminance values) of the pixels within the block of the input frame image is used, the pixels within the block of the input frame image corresponding to the respective pixels within the block of the reference frame image. In this case, a block for which the sum is the smallest can be considered to have the closest correlation. The block having the closest association is associated as a feature point.

Next, the feature point scoring processing unit 230 extracts feature points from the input frame image (step S32).

For example, the feature point scoring processing unit 230 includes an image feature point extraction unit and extracts feature points (image feature points) from an image (input frame image) captured by the spherical image capturing apparatus 1. The image feature point extraction unit extracts feature points from each captured image. The image feature point extraction unit may use, for example, a method in which feature points are extracted by using the luminance value of the image or a method in which feature points are extracted on the basis of the shape, etc. of an object in the image; however, the method is not limited to these.

As the method for extracting feature points, for example, the Harris operator or the Features from Accelerated Segment Test (FAST) operator can be used. The Harris operator is image processing in which a point of intersection of two edges is detected as a corner. The FAST operator is image processing in which in a case where the pixel values of a set of at least n contiguous pixels among 16 pixels on the circumference of a circle around a pixel of interest are all brighter or darker than that of the pixel of interest, a corner is detected. In addition, as the method for extracting feature points, the Scale Invariant Feature Transform (SIFT) feature descriptor or the Speeded Up Robust Features (SURF) feature descriptor can be used. The image feature point extraction unit records the coordinates of the feature points on the image and the feature values (pixel values, density values, luminance values, etc.) of the feature points in the storage unit 118 as image feature point information.

Next, the feature point scoring processing unit 230 removes, from the feature points extracted from the input frame image, points that overlap with the feature points associated in step S31 (step S33). This is performed by removing, from the feature points extracted in step S32, feature points near the feature points that are successfully associated in step S31. The number of removed feature points is the number of feature points that are present in the reference frame image and that survive in the input frame image (corresponding to the number of tracked points described below). Feature points that remain after removal correspond to feature points that newly appear.

Last, the feature point scoring processing unit 230 calculates a frame novelty score (s) vector (step S34). The frame novelty score (s) vector represents two ratios of "survival ratio" and "emergence ratio" indicated below as the magnitudes of parameters.

$$\text{Survival ratio} = \text{Number of tracked feature points in input frame image} / \text{Number of feature points in reference frame image}$$

$$\text{Emergence ratio} = \text{Number of feature points newly extracted from input frame image} / \text{Number of feature points in reference frame image}$$

Here, the number of newly extracted feature points is the number of feature points newly emerge in the input frame image.

The recording determination unit 250 determines whether to record the processing target frame image on the basis of the results obtained by the feature point scoring processing unit 230 and the result obtained by the blur amount calculation processing unit 240. In a case where the recording determination unit 250 determines that the processing target frame image is to be recorded, the image input unit 220 updates the reference frame image with the processing target frame image.

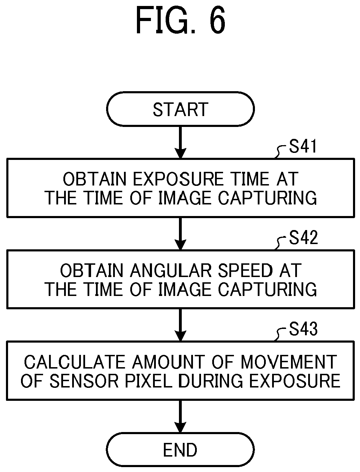

FIG. 6 is a flowchart illustrating an example calculation process for calculating the amount of blur performed by the blur amount calculation processing unit 240. Here, for example, the method for calculating the amount of blur on the basis of the exposure time of the imaging element 21 (imaging element 22) at the time of image capturing and the angular speed of the main body of the spherical image capturing apparatus 1 is described.

The blur amount calculation processing unit 240 first obtains the exposure time at the time of image capturing from the image capturing unit 116 (step S41). The blur amount calculation processing unit 240 further obtains the angular speed at the time of image capturing from the IMU 117 (step S42).

The blur amount calculation processing unit 240 calculates the amount of movement of a pixel (amount of blur) in the imaging element during exposure from the exposure time and the angular speed (step S43).

The amount of blur $\delta x_i$ of a certain point $x_i$ can be calculated using Expression (1) below.

$$\delta x_i = \pi\left(\delta R\left(\pi^{-1}(x_i)\right) + \delta t\right) - x_i \qquad \text{Expression (1)}$$

Here, $\pi$ is a projection conversion function, $\delta R$ is a rotation matrix representing the amount of rotation during exposure obtained from the angular speed and the exposure time, $\delta t$ is a movement vector representing a movement of the main body during exposure, and $\pi^{-1}$ is an inverse projection conversion function.

Expression (2) represents a spherical surface projection model, and Expression (3) represents the inverse projection conversion function.

$$\pi(p) = \left[\frac{p_x}{d}, \frac{p_y}{d}, \frac{p_z}{d}\right]^{\wedge}t \qquad \text{Expression (2)}$$

$$\pi^{-1}(x) = d * \left[x_x, x_y, x_z\right]^{\wedge}t \qquad \text{Expression (3)}$$

In a case where $\delta R$ is very small and $\pi^{-1}(x)$ is larger than $\delta t$, $\delta t$ can be disregarded, and therefore, the amount of blur can be estimated using Expression (4) below.

$$\delta x_i = \delta R(x_i) - x_i \qquad \text{Expression (4)}$$

When the angular resolution per one pixel of the sensor is represented by f, the following expression can be used to calculate the amount of blur on a per pixel basis.

$$\frac{\delta x_i}{f} \qquad \text{Expression (5)}$$

In this case, the blur amount calculation processing unit 240 can consequently output the amount of blur on a per pixel basis for each frame image, and therefore, the recording determination unit 250 can determine whether the amount of blur is equal to or larger than a threshold (for example, an amount of blur equivalent to several pixels or more) for each pixel. Accordingly, the recording determination unit 250 can record the frame image while suppressing the amount of blur to an amount equivalent to several pixels.

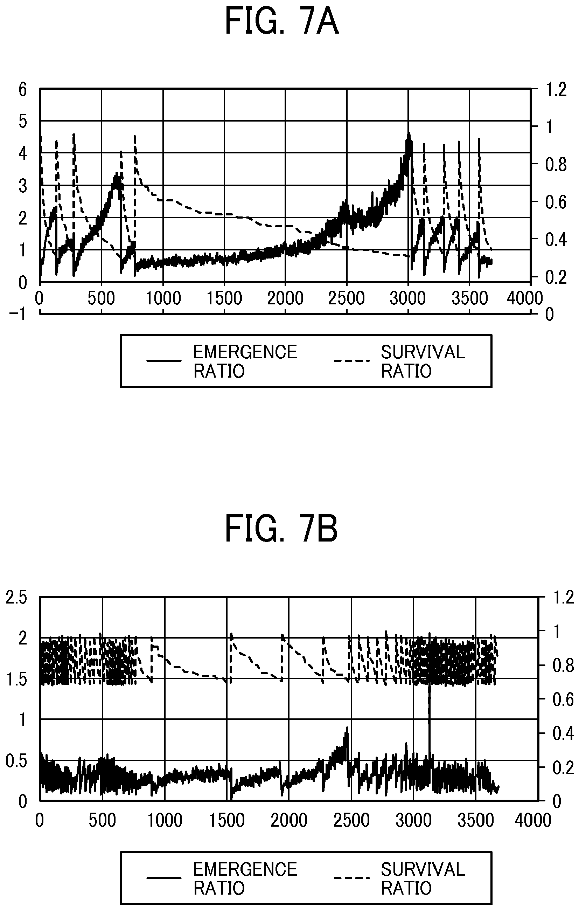

FIGs. 7A and 7B are graphs illustrating an example of a difference in recording density of an input frame image in a case where a condition for recording the input frame image differs. FIGs. 7A and 7B also illustrate changes in the survival ratio and the emergence ratio of feature points, which are conditions based on which an input frame image is recorded. FIG. 7A illustrates changes in a case of a condition that the reference frame image is to be updated (that is, the input frame image is to be recorded) when the emergence ratio is 5 or more or the survival ratio is 0.4 or less. FIG. 7B illustrates changes in a case of a condition that the reference frame image is to be updated when the emergence ratio is 2 or more or the survival ratio is 0.8 or less. In both FIG. 7A and FIG. 7B, the left vertical axis represents the emergence ratio, the right vertical axis represents the survival ratio, and the horizontal axis represents the frame number.

In the example illustrated in FIGs. 7A and 7B, the frequency of updating the reference frame image is higher in FIG. 7B than in FIG. 7A, and the recording density of the input frame image is higher in FIG. 7B than in FIG. 7A. When the threshold of the survival ratio is increased or the threshold of the emergence ratio is decreased, the recording density of the input frame image increases. When the threshold of the survival ratio is decreased or the threshold of the emergence ratio is increased, the recording density of the input frame image decreases.

It is desirable not to employ novelty obtained during a period from when an image having novelty is obtained to when a predetermined image capture preparation time after which the next image having novelty is allowed to be obtained elapses.

Captured spherical images (frame images) recorded by using the image capture recording method as described above are automatically recorded at image capture intervals such that the amount of change in feature points is suppressed within a predetermined change. The recorded captured images (frame images, which are still images) can be successively reproduced so that the images look like a moving image. This is called time-lapse image capturing. At this time, instead of recoding of only still images, recording in a moving image format based on, for example, Motion Joint Photographic Experts Group (JPEG) can be performed. Accordingly, even for images captured by a person who does not have prior technical knowledge, three dimensions are configured in, for example, an external apparatus by using a technique, such as the SfM or the Visual SLAM, for recorded images. In this case, a group of images can be captured that are sufficient to stably achieve the accuracy of 3D reconfiguration of feature points closer to or higher than that achieved in a case of image capturing by a person having prior knowledge.

Example Application

One example application is a virtual preview of a real estate property. A virtual preview is a system that enables a person looking for a property for rent to remotely preview the property by viewing 360-degree panoramic images captured with a spherical camera at points in rooms, corridors, etc. of the property. In the virtual preview, the person clicks or taps an icon that represents an image capture point, arranged on the floor plan of the building, at which moving to another image capture point or changing of the viewpoint is performed or clicks or taps an icon that represents an adjacent image capture point embedded in a 360-degree panoramic image to move the viewpoint. Further, the person flicks or drags a 360-degree image to change the viewpoint with pan and tilt. While performing these operations, the person can view scenes in the property. The method for viewing a space while performing operations of moving in a 360-degree panoramic image and changing the viewpoint with pan and tilt is known as a 360-degree tour.

An operation of defining the image capture point of an image viewed from another image for display as a 3D tour and an operation of defining the image capture position on the floor plan or the plan view are typically performed manually, and therefore, data generation for the tour takes time and effort. A technique for automatically estimating the relative position and angle in image capture point switching using a technique, such as the SfM or the Visual SLAM, is available.

In this technique, local regions called feature points that can be easily distinguished from the other regions are extracted from a group of images captured at a plurality of points, and the feature points in one image are associated with those in another image to estimate the 3D positions of the feature points. On the contrary, in this technique, the image capture points are estimated from the arrangements of 3D points of the feature points on the images. In a case of using the techniques described above, a special image capturing method needs to be used, the feature points need to be successfully associated, and image capturing needs to be performed at image capture intervals with which the accuracy of 3D reconfiguration of the feature points is increased.

Specifically, it is desirable not to make the image capturing intervals excessively wide so that the appearance of the feature points does not significantly change and to capture images of points, for which 3D reconfiguration is performed, at various angle so that the accuracy of 3D reconfiguration is maintained. Suitable intervals taking into consideration a trade-off between these points differ depending on the configuration of a space for which images are to be captured, and therefore, a person is forced to capture images taking into consideration the technical limitation of the SfM, which is troublesome to the person who captures images.

As the method for a person who captures images to generate a tour without having prior knowledge, a method is available in which the person captures a moving image while walking around the site, and thereafter, generates a tour using the SfM or the Visual SLAM. However, this method has disadvantages in that images taken from the moving image have a resolution lower than that of a still image, the images are degraded due to a codec, and the image quality is degraded due to a camera shake or a blur of an object because the person captures images while moving. Further, a scene that does not appear to change is also recorded, and therefore, a file includes a number of pieces of redundant data, which results in an increase in the file size.

These disadvantages are avoided by using recorded images captured by using the image capturing apparatus and the image recording method according to this embodiment.

First Modification

When a 360-degree image is captured with the spherical image capturing apparatus 1, the person capturing the image is present in the spherical image. Therefore, the amount of change may significantly change not due to a change in a surrounding structure, etc. but due to the image capturing person. Accordingly, the configuration is modified such that the feature point scoring processing unit 230 identifies the region of the image capturing person present in a processing target frame image and excludes feature points within the region.

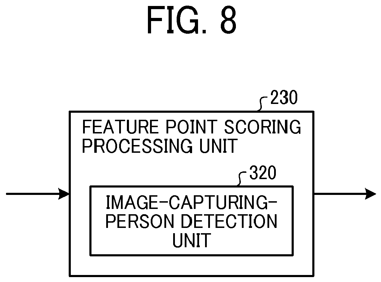

FIG. 8 is a diagram illustrating an example configuration of the feature point scoring processing unit 230 according to a first modification. The feature point scoring processing unit 230 of the first modification illustrated in FIG. 8 includes an image-capturing-person detection unit 320. The image-capturing-person detection unit 320 corresponds to "image-capturing-person region identification means".

The image-capturing-person detection unit 320 detects the image region of the image capturing person (image-capturing-person region) in a processing target frame image (spherical image data). The image-capturing-person detection unit 320 identifies the image-capturing-person region by setting in advance a specific region in the spherical image data as an image-capturing-person search region. In a case where the image capturing person correctly operates the spherical image capturing apparatus 1, the image-capturing-person search region in the spherical image data is uniquely determined. For example, a case is assumed where the image capturing person presses the image capture switch 13 to start image capturing. In this case, the image capturing person is highly likely to be reflected in the fisheye lens 12 illustrated on the right side of FIG. 1. Therefore, in the spherical image data, a center region or the like of an image captured by the fisheye lens 12 is set as the image-capturing-person search region. The region, in the spherical image data, that is set as the image-capturing-person search region may be determined as appropriate from the positional relationship between the fisheye lenses 11 and 12 and the image capture switch 13.

The image-capturing-person detection unit 320 searches the image-capturing-person search region and, for example, detects a face image to identify the image-capturing-person region. The feature point scoring processing unit 230 excludes feature points within the image-capturing-person region identified by the image-capturing-person detection unit 320 and calculates the amount of change.

The image-capturing-person detection unit 320 may detect the image capturing person by using another method or combining another method. For example, the image-capturing-person detection unit 320 performs a face image detection process for the entire region of the spherical image data. In a case where a plurality of face images are detected, the image-capturing-person detection unit 320 may identify the largest face image or a face image having a size exceeding a threshold among the face images as the image-capturing-person region. The image capturing person presses the image capture switch 13 of the spherical image capturing apparatus 1, and therefore, the image capturing person is located closest to the spherical image capturing apparatus 1. Therefore, even in the case where a plurality of face images are detected, the largest face image among the face images can be regarded as the image of the image capturing person.

Although the embodiment and modification of the image capturing apparatus have been described, the configuration and operations of the image capturing apparatus are examples and are not limited to these. For example, the image capturing apparatus in which one set of a fisheye lens and an imaging element, which is an image sensor, is provided on each of the front side and the back side has been described; however, one set of a fisheye lens and an imaging element may be provided on only the front side or the back side. Two or more sets of fisheye lenses and imaging elements, which are image sensors, may be provided on each of the front side and the back side. The fisheye lenses need not be used, and other lenses, such as wide-angle lenses, may be used. For example, a prism may be provided, and each imaging element may be provided at a position at which the optical path turns 90 degrees.

As the amount of change, any change between the first image and the second image (common points, different points, a difference, etc.) may be obtained. As the amount of change, a change based on feature points need not be obtained, and the amount of change may be obtained by comparing all pixels or comparing the luminance distributions (histograms) of captured images. Note that the example of obtaining the amount of change using feature points is advantageous in the processing speed of obtaining the amount of change.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

**Claims**

1. An image capturing apparatus comprising:

   image capturing means (21, 22, 116, 210) configured to capture images; and
   recording control means (260) configured to compare a first image with a second image among the captured images, the second image being an image captured after the first image has been captured, and to control recording of the second image in accordance with an amount of change from the first image.

2. The image capturing apparatus according to Claim 1, further comprising
   obtaining means (230) configured to obtain the amount of change from the first image for each second image among the captured images, wherein
   the recording control means is configured to control recording of the second image in accordance with the obtained amount of change.

3. The image capturing apparatus according to Claim 1 or 2, further comprising
   determination means (250) configured to determine whether to record the second image, wherein
   the recording control means is configured to control recording of the second image that is determined by the determination means to be recorded.

4. The image capturing apparatus according to Claim 3, wherein
   in a case where the determination means determines that the second image captured by the image capturing means is to be recorded, the recording control means is configured to set the second image as a first image and to compare the first image with a second image captured after the first image has been captured.

5. The image capturing apparatus according to Claim 3 or 4, wherein
   the amount of change has a decrease ratio of the number of feature points in the second image corresponding to feature points in the first image as a parameter, and
   the determination means is configured to determine that the second image is to be recorded in a case where a value indicating the decrease ratio for the second image captured by the image capturing means is equal to or smaller than a predetermined value.

6. The image capturing apparatus according to Claim 5, wherein
   the amount of change further has a change ratio of the number of feature points that are not included in the feature points in the first image and that newly appear in the second image as a parameter, and
   the determination means is configured to determine that the second image is to be recorded also in a case where a value indicating the change ratio for the second image captured by the image capturing means is equal to or larger than a predetermined value.

7. The image capturing apparatus according to any one of Claims 3 to 6, further comprising
   blur amount calculation means (240) configured to calculate an amount of blur in the second image captured by the image capturing means, wherein
   the determination means is configured to determine that the second image captured by the image capturing means is not to be recorded in a case where the amount of blur calculated by the blur amount calculation means exceeds a predetermined threshold.

8. The image capturing apparatus according to any one of Claims 3 to 7, further comprising
recording means configured to record the second image that is determined by the determination means to be recorded.

9. The image capturing apparatus according to Claim 1, wherein
novelty obtained during a period from when an image having novelty is obtained to when a predetermined image capture preparation time after which a next image having novelty is obtained elapses is not employed.

10. The image capturing apparatus according to any one of Claims 1 to 9, wherein
the images are spherical images.

11. The image capturing apparatus according to Claim 10, further comprising
image-capturing-person region identification means (320) configured to exclude, from the amount of change, an amount of change due to an image capturing person.

12. The image capturing apparatus according to Claim 8, wherein
recording to the recording means is performed in a moving image format.

13. An image recording method for an image capturing apparatus, the image recording method comprising:

capturing images;
comparing a first image with a second image among the captured images, the second image being an image captured after the first image has been captured; and
controlling recording of the second image in accordance with an amount of change from the first image.

# FIG. 1

# FIG. 2

1

```
   ┌─14
┌────────┐
│  LED   │
└────────┘
     ▲
     │
┌────────┐  ┌──────────┐  ┌────────┐  ┌────────┐  ┌──────────┐  ┌────────┐
│DISPLAY │  │  IMAGE   │  │  CPU   │  │  GPU   │  │ OPERA-   │  │  IMU   │
│ UNIT   │  │CAPTURING │  │        │  │        │  │TION UNIT │  │        │
│        │  │  UNIT    │  │        │  │        │  │          │  │        │
└────────┘  └──────────┘  └────────┘  └────────┘  └──────────┘  └────────┘
  115         116           110         111         114           117
```

100

```
┌────────┐  ┌────────┐  ┌──────────┐  ┌──────────┐
│  ROM   │  │  RAM   │  │ STORAGE  │  │ COMMU-   │
│        │  │        │  │  UNIT    │  │ NICATION │
│        │  │        │  │          │  │  UNIT    │
└────────┘  └────────┘  └──────────┘  └──────────┘
  112         113         118           119
```

# FIG. 3

IMAGE PROCESSING UNIT 200

IMAGE CAPTURING UNIT 116

INSTRUCTION UNIT 210

FRAME IMAGE (N)

IMAGE INPUT UNIT 220
REFERENCE FRAME IMAGE

FEATURE POINT SCORING PROCESSING UNIT 230

BLUR AMOUNT CALCULATION PROCESSING UNIT 240

RECORDING DETERMINATION UNIT 250

RECORDING PROCESSING UNIT 260

STORAGE UNIT 118

EP 3 629 570 A2

# FIG. 4

```
              ┌──────────────┐
              │    START     │
              └──────┬───────┘
                     │                    ⌐S1
     ┌──────▶┌───────────────────────┐
     │       │    IMAGE CAPTURING     │
     │       └───────────┬───────────┘
     │                   │            ⌐S2
     │       ┌───────────────────────┐
     │       │ INPUT OF CAPTURED IMAGES│
     │       └───────────┬───────────┘
     │                   │            ⌐S3
     │       ┌───────────────────────┐
     │       │  SCORING PROCESS FOR   │
     │       │   AMOUNT OF CHANGE     │
     │       └───────────┬───────────┘
     │                   │            ⌐S4
     │       ┌───────────────────────┐
     │       │ BLUR AMOUNT CALCULATION│
     │       │        PROCESS         │
     │       └───────────┬───────────┘
     │                   │            ⌐S5
     │    No   ╱─────────────────────╲
     │  ◀──────│     DETERMINATION     │
     │         ╲    ON RECORDING?     ╱
     │          ╲───────────────────╱
     │                   │ Yes       ⌐S6
     │       ┌───────────────────────┐
     │       │ REFERENCE FRAME UPDATE │
     │       └───────────┬───────────┘
     │                   │            ⌐S7
     │       ┌───────────────────────┐
     │       │ IMAGE RECORDING PROCESS│
     │       └───────────┬───────────┘
     │                   │            ⌐S8
     │    No   ╱─────────────────────╲
     └─────────│   DETERMINATION ENDS? │
               ╲───────────────────╱
                     │ Yes
              ┌──────────────┐
              │     END      │
              └──────────────┘
```

# FIG. 5

```
        ┌──────────────┐
        │    START     │
        └──────────────┘
                │
                ▼                    ⌐S31
┌─────────────────────────────────┐
│   ASSOCIATE FEATURE POINTS IN    │
│  REFERENCE FRAME WITH THOSE      │
│         IN INPUT FRAME           │
└─────────────────────────────────┘
                │
                ▼                    ⌐S32
┌─────────────────────────────────┐
│    EXTRACT FEATURE POINTS        │
│       FROM INPUT FRAME           │
└─────────────────────────────────┘
                │
                ▼                    ⌐S33
┌─────────────────────────────────┐
│ REMOVE, FROM EXTRACTED FEATURE   │
│ POINTS, POINTS THAT OVERLAP WITH │
│ SUCCESSFULLY ASSOCIATED POINTS   │
└─────────────────────────────────┘
                │
                ▼                    ⌐S34
┌─────────────────────────────────┐
│   CALCULATE FRAME NOVELTY        │
│      SCORE (s) VECTOR            │
└─────────────────────────────────┘
                │
                ▼
        ┌──────────────┐
        │     END      │
        └──────────────┘
```

# FIG. 6

START

S41

OBTAIN EXPOSURE TIME AT
THE TIME OF IMAGE CAPTURING

S42

OBTAIN ANGULAR SPEED AT
THE TIME OF IMAGE CAPTURING

S43

CALCULATE AMOUNT OF MOVEMENT
OF SENSOR PIXEL DURING EXPOSURE

END

## FIG. 7A

EMERGENCE RATIO ———  SURVIVAL RATIO ----

## FIG. 7B

EMERGENCE RATIO ———  SURVIVAL RATIO ----

# FIG. 8

┌─230
**FEATURE POINT SCORING PROCESSING UNIT**

┌─320
**IMAGE-CAPTURING-PERSON DETECTION UNIT**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011205599 A
- JP 2015207281 A